# EUROPÄISCHE PATENTSCHRIFT

(11) **EP 3 354 508 B1**
(45) Veröffentlichungstag und Bekanntmachung des Hinweises auf die Patenterteilung: **12.02.2020**
(21) Anmeldenummer: 17208287.7
(22) Anmeldetag: 19.12.2017
(51) Int. Cl.: B60K 15/035, F02M 25/08, B60K 15/03

(54) **TANKENTLÜFTUNGSSYSTEM FÜR EINE VERBRENNUNGSKRAFTMASCHINE UND VERFAHREN ZUR REGENERIERUNG EINES SORPTIONSSPEICHERS**
TANK VENTILATION SYSTEM FOR A COMBUSTION ENGINE AND METHOD FOR REGENERATING A SORPTION MEMORY
SYSTÈME DE VENTILATION DU RÉSERVOIR POUR UN MOTEUR À COMBUSTION INTERNE ET PROCÉDÉ DE RÉGÉNÉRATION D'UN RÉSERVOIR À SORPTION

(30) Priorität: 31.01.2017 DE 102017201530
(43) Veröffentlichungstag der Anmeldung: 01.08.2018
(73) Patentinhaber: VOLKSWAGEN AKTIENGESELLSCHAFT, 38440 Wolfsburg (DE)
(72) Erfinder: Wodausch, Jens, 38108 Braunschweig (DE)

(56) Entgegenhaltungen:
- DE-A1- 10 323 869
- DE-A1-102013 109 459
- US-A1- 2011 132 331

## Beschreibung

Die vorliegende Erfindung betrifft ein Tankentlüftungssystem einer Verbrennungskraftmaschine mit einem Tank, der über eine Tankentlüftung mit einem Sorptionsspeicher zum Zwischenspeichern von Kraftstoff aus einem Tankentlüftungsstrom verbunden ist, und einer Spülluftpumpe zum Zuführen von regeneriertem Kraftstoff aus dem Sorptionsspeicher über einen Spülluftstrom in einen Ansaugluftstrom zur Verbrennungskraftmaschine. Weiter betrifft die Erfindung ein Verfahren zum Regenerieren eines Sorptionsspeichers, der Bestandteil eines solchen Tankentlüftungssystems ist.

Für Fahrzeuge, die einen Ottomotor als Verbrennungskraftmaschine (VKM) aufweisen, sind Tankentlüftungssysteme bzw. Kraftstoffverdunstungs-Rückhaltesysteme vorgesehen, um zu verhindern, dass aus dem Tank (Kraftstoffbehälter) Kraftstoffdämpfe freigesetzt werden.

Insbesondere können solche Systeme dazu beitragen, die Kohlenwasserstoff(HC)-Emissionen zu senken. Aus technischer Sicht sind mehrere Anforderungen zu erfüllen: Zum einen muss gewährleistet sein, dass sich - zum Beispiel unter Wärmeeinstrahlung - der Innendruck eines Kraftstofftanks nicht unzulässig erhöht, und zum anderen muss sichergestellt werden, dass frei werdende Kraftstoffdämpfe zurückgehalten werden.

Es muss also eine Entlüftungsmöglichkeit des Tanks geben und eine Einrichtung zum Zurückhalten der Kraftstoffdämpfe. Für diese Funktion wird im Allgemeinen ein Behälter mit Aktivkohle (Aktivkohlefalle, Aktivkohlefilter, kurz: AKF) verwendet, der über eine Leitung mit der Gas-/Dampfphase des Kraftstofftanks verbunden ist und über eine weitere Leitung oder einen Anschluss mit der Umgebung.

Beim Entlüften des Tanks speichert der AKF die Kraftstoffdämpfe, die sich an der Aktivkohle anlagern (Adsorptionsspeicher), und filtert dabei den Entlüftungsstrom aus dem Tank, so dass keine Kohlenwasserstoffe in die Umgebung gelangen. Da AKF nur ein begrenztes Aufnahmevermögen haben, müssen sie regelmäßig regeneriert werden. Dabei werden die an der Aktivkohle angelagerten Kraftstoffbestandteile wieder abgelöst. Dies geschieht in der Regel durch die Spülung des AKF mit Frischluft während der Fahrt. Dazu ist der AKF über eine weitere Leitung in der Regel mit dem Ansaugtrakt des Motors verbunden, über den Frischluft angesaugt wird. Der Unterdruck saugt zusätzlich Frischluft durch den AKF, diese wird mit Kraftstoff angereichert - dabei wird die Aktivkohle regeneriert - der dann in der Verbrennungskraftmaschine verbrannt wird.

Bei modernen Turboladermotoren ist jedoch der Ansaug(Unter-)druck im Ansaugtrakt oft so gering, dass keine ausreichende Spülung des AKF während des Fahrbetriebs möglich ist. Der erzeugte Spülluftstrom ist zu gering. Außerdem kann der Spülluftmassenstrom stark mit dem wechselnden Druckniveau im Ansaugtrakt schwanken. Das den Spülluftstrom bewirkende (Unter-)Druckniveau hängt sehr stark von der jeweiligen Fahrsituation bzw. vom Betriebszustand der Verbrennungskraftmaschine, eines Verdichters und insbesondere einer Abgasturboladeranordnung ab, mit der die meisten modernen Ottomotoren versehen sind.

Bei den üblichen Tankentlüftungssystemen wird der Spülluftmassenstrom mithilfe eines sogenannten Regenerierventils (auch Tankentlüftungsventil) eingestellt. Dieses Regenerierventil ist in einer Leitung angeordnet, die den Aktivkohlebehälter mit dem Saugrohr verbindet. Gibt das Regenerierventil während der Fahrt bzw. beim Betrieb der VKM die Leitung zwischen dem AKF und dem Saugrohr frei, wird Frischluft durch die Aktivkohle gesaugt. Sie nimmt den dort absorbierten Kraftstoff auf und führt ihn der Verbrennung zu. Dabei wird die Aktivkohle des Aktivkohlebehälters regeneriert, damit die Aktivkohle des Aktivkohlefilters für neu ausdampfenden Kraftstoff aus dem Kraftstofftank wieder aufnahmefähig ist. Diese Regenerierung erfolgt regelmäßig.

Unter Umständen ist es erforderlich, zur ausreichenden Regenerierung des Aktivkohlefilters den Betriebszustand der VKM zu verändern. Zum Beispiel muss bei Systemen mit Benzindirekteinspritzung im Schichtbetrieb, in dem der Druckunterschied zwischen Saugrohr und Umgebungsdruck sehr gering ist, in den Homogenbetrieb umgeschaltet werden.

In Verbindung mit einer Motorsteuerung, welche das Entlüftungsventil ansteuern kann, und einer λ-Regelungseinrichtung zum Einstellen des zuzuführenden Luft-Kraftstoff-Gemisches in die Verbrennungskraftmaschine kann auch der Beladungs- bzw. Sättigungsgrad des Aktivkohlefilters ermittelt werden. So ein Ansatz ist aus der DE 197 01 353 C1 bekannt.

Es gibt auch Systeme, bei denen zur zusätzlichen Förderung (Druckerhöhung) und für andere Aufgaben zwischen dem Aktivkohlefilter und dem Belüftungsventil eine Fördereinrichtung (zum Beispiel eine Pumpe) vorgesehen ist.

Einen Ansatz, bei dem eine solche Pumpe auch dazu vorgesehen ist, eine Kraftstofftankleckdiagnose durchzuführen, ist aus der DE 10 2010 064 239 A1 bekannt. Ein anderes System, bei dem eine Spülluftpumpe in Verbindung mit einem FSI-Motor verwendet wird, ist aus der DE 196 50 517 A1 bekannt. Bei diesem Konzept ist jedoch keine Abgasturboaufladung vorgesehen.

DE 10 2013 109 549 A1 offenbart eine Tankentlüftungsanlage für eine Verbrennungskraftmaschine mit einem Adsorptionsbehälter und einen über eine Spülleitung mit dem Adsorptionsbehälter verbundenen Kraftstofftank. Eine Spülluftströmung wird durch ein Pumpenmodul generiert, das über ein Steuergerät steuerbar ist und über eine Verbindungsleitung mit einem Ansaugtrakt der Verbrennungskraftmaschine in Verbindung steht. Eine Menge der in den Ansaugtrakt zugeführten Spülluft wird durch einen Betriebszustand der Verbrennungskraftmaschine bestimmt und durch das Pumpenmodul dosiert.

Bei den bekannten Systemen erfolgt die Einstellung (Steuerung bzw. Regelung) des Spülluftstroms über das Spülluftventil. Damit sind Steuerventile erforderlich, deren Durchlass in der Regel über ein Ansteuerungstastverhältnis eingestellt wird. Eine ergänzend vorgesehene Spülluftpumpe arbeitet dabei - gegebenenfalls auch völlig unabhängig von den notwendigen Druck- oder Volumenstromanforderungen - bei einer festen Nennlast.

Insbesondere beim Zuführen des Spülluftstroms in den Ansaugtrakt in Strömungsrichtung hinter dem Abgasturbolader sind dazu relativ hohe Drücke erforderlich. Es gibt auch Betriebszustände, bei denen die Nennlast der Pumpe für eine maximale Spülung zu gering ist - der Spülvorgang dauert länger, als es der Betriebszustand der VKM erlauben würde - oder der Druck bzw. der Volumenstrom ist sehr hoch und wird durch das Spülluftventil stark begrenzt - die Pumpe arbeitet unwirtschaftlich.

Es besteht also die Aufgabe, ein verbessertes Tankentlüftungssystem bereitzustellen, das wenigstens einen Teil der oben dargestellten Probleme löst.

Diese Aufgabe wird durch das erfindungsgemäße Tankentlüftungssystem gemäß Anspruch 1,durch das erfindungsgemäße Verfahren zur Regeneration eines Sorptionsspeichers gemäß Anspruch 12 und durch das Kraftfahrzeug gemäß Anspruch 14 gelöst. Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erfindungsgemäßes Tankentlüftungssystem einer Verbrennungskraftmaschine umfasst einen Tank, der über eine Tankentlüftung mit einem Sorptionsspeicher (Aktivkohlefilter, AKF) zum Zwischenspeichern von Kraftstoff aus einem Tankentlüftungsstrom verbunden ist, eine Spülluftpumpe, die einen Spülluftstrom erzeugt, über den regenerierter Kraftstoff aus dem Sorptionsspeicher in einen Ansaugluftstrom zur Verbrennungskraftmaschine geführt wird, wobei eine Steuerung vorgesehen ist, die dazu ausgebildet ist, die Spülluftpumpe derart anzusteuern, dass der Spülluftstrom hinsichtlich seines Drucks, seiner Masse und/oder seines Volumens einstellbar ist, so dass eine Dosierung des regenerierten Kraftstoffs über den Spülluftstrom in den Ansaugluftstrom entsprechend einem Betriebszustand der Verbrennungskraftmaschine erfolgt.

Bei so einem System wird die Spülluftpumpe nicht nur zum Druckaufbau bzw. zur Volumenförderung genutzt, sondern auch zum Einstellen des Spülluftstroms hinsichtlich seines Drucks, seiner Masse und/oder seines Volumens. Damit ist es möglich, das sonst erforderliche regelbare Entlüftungsventil bzw. dessen Ansteuerung zu vereinfachen. Gegebenenfalls kann es sogar ganz entfallen.

Dadurch, dass der Betrieb der Spülluftpumpe auf einen Betriebszustand der Verbrennungskraftmaschine abgestimmt wird, kann eine gezielte Dosierung des regenerierten Kraftstoffs über den Spülluftstrom in den Ansaugluftstrom bzw. den Ansaugtrakt über die Einstellung (Regelung und/oder Steuerung) der Spülluftpumpe erfolgen. Dies ist bei modernen Motoren besonders wichtig, da sonst die erforderlichen engen Grenzwerte von Abgaswerten nur schwer eingehalten werden können. Die genaue Kraftstoffdosierung, die nicht nur über den unmittelbar eingespritzten Kraftstoff erfolgt, sondern auch über den zeitweise zusätzlich zugeführten Kraftstoff aus dem Tankentlüftungssystem, ist mit so einem System möglich. Dabei gibt es Ausführungen, bei denen der Betriebszustand der Verbrennungskraftmaschine eine Drehzahl und/oder einen Lastzustand umfasst. Damit kann das Spülluftsystem optimal auf den Betriebszustand der Verbrennungskraftmaschine abgestimmt werden. Es ist nicht erforderlich, den Betriebszustand der Verbrennungskraftmaschine im Hinblick auf eine erforderliche Regenerierung des Aktivkohlefilters zu verändern, sondern das Tankentlüftungssystem passt sich an den gewünschten oder (verbrauchs-)optimierten Betriebszustand der VKM an.

Erfindungsgemäß wird der Ansaugluftstrom der Verbrennungskraftmaschine über einen Verdichter zugeführt und die Dosierung wird zusätzlich oder maßgeblich entsprechend einem Betriebszustand des Verdichters festgelegt. Dies erlaubt einen Pumpenbetrieb, der entsprechend der Aktivität eines zeitweise arbeitenden Verdichters steuerbar bzw. einstellbar ist. Damit kann die Leistung der Spülluftpumpe an die Verdichterleistung angepasst werden. Vorhandene Druckgefälle zwischen der Spülluftleitung und dem Ansaugtrakt können so einfach über den Verdichterbetrieb (z.B. über dessen Drehzahl oder Leistungsaufnahme) beachtet werden.

Dabei gibt es Ausführungen, bei denen der Verdichter als Abgasturbolader (ATL) ausgebildet ist. ATL sind besonders geeignet, bei relativ kleinvolumigen Ottomotoren hohe Leistungen und eine verbrauchsarme Kraftstoffnutzung zu ermöglichen. Eine Abstimmung des Tankentlüftungssystems auf solche Verbrennungskraftmaschinen mit Abgasturbolader erweitert die Möglichkeiten, um Emissionswerte, insbesondere HC-Emissionswerte, positiv zu beeinflussen, ohne dass dabei die Regenerierung des AKF eingeschränkt wird.

Bei Ausführungen, bei denen der Spülluftstrom bezogen auf die Ansaugluftstromrichtung vor dem Verdichter bzw. dem Abgasturbolader dem Ansaugluftstrom zugeführt wird, sind Spülluftpumpen besonders effektiv, da die Druckverhältnisse für ein effektives Spülen günstig sind (absolutes Druckniveau im Spülluftsystem niedrig). Bei so einer Ausführung ist es möglich, über die Spülluftpumpe auch bei geringem Druckunterschied zwischen der Umgebung und dem Ansaugrohrbereich vor dem Abgasturbolader zuverlässig eine Regenerierung des Aktivkohlefilters durchzuführen. Eine Anpassung des Betriebszustands der Verbrennungskraftmaschine ist nicht erforderlich.

Es gibt Ausführungen, bei der die Spülluftpumpe einen elektrischen Antrieb umfasst, der strom- und/oder spannungsabhängig hinsichtlich Drehmoment und/oder Drehzahl über die Steuerung einstellbar ist. Die Dosierung erfolgt über die Ansteuerung des elektrischen Antriebs. Die Einstellung des Spülluftstroms hinsichtlich seines Drucks, seiner Masse und/oder seines Volumens bzw. eine Dosierung des regenerierten Kraftstoffs ist besonders einfach über die elektrischen Versorgungswerte des elektrischen Antriebs zu realisieren. Dieser kann beispielsweise einfach über eine Stromstärke, eine Spannung und/oder über eine Erregerfrequenz angesteuert werden.

Dabei gibt es Ausführungen, bei denen diese Ansteuerung des elektrischen Antriebs über ein Kennfeld erfolgt. So können z.B. die Betriebszustände der Verbrennungskraftmaschine und/oder die eines Verdichters bestimmten Ansteuerungswerten des elektrischen Antriebs zugeordnet werden. Die Spülluftpumpe ist so auch über komplexe Betriebszustandskombinationen (z.B. bei Kombination mehrerer Kennfelder) in der gewünschten Weise ansteuerbar.

Es gibt Ausführungen, bei denen die Dosierung unter Berücksichtigung eines λ-Werts erfolgt, der von einer in einem Abgasstrom angeordneten λ-Sonde erfasst wird. Die Nutzung einer λ-Steuerung ermöglicht es, den Spülluftstrom nicht nur hinsichtlich der Regenerierung des Aktivkohlefilters einzustellen, sondern auch hinsichtlich einer äußerst exakten Kraftstoffdosierung.

Es gibt Ausführungen, wobei in einer Spülluftleitung ein Drucksensor zum Erfassen des Spülluftdrucks angeordnet ist und der Spülluftstrom unter Berücksichtigung eines Drucksignals eingestellt ist. Damit ist es möglich, die Ansteuerungskriterien für die Spülluftpumpe durch einen Druckwert zu erweitern.

Gleiches gilt für Ausführungen, bei denen in einer Spülluftleitung ein Volumenstromsensor zum Erfassen eines Spülluftvolumenstroms angeordnet ist und der Spülluftstrom unter Berücksichtigung eines Volumenstromsignals einstellbar ist. Auch so eine zusätzliche Berücksichtigung von Ist-Werten im Spülluftstrom erlaubt eine weitere Differenzierung der Ansteuerung der Spülluftpumpe.

Gleiches gilt für Lösungen, bei denen zusätzlich auch eine Temperatur erfasst wird. Mit der teilweisen bzw. gleichzeitigen Erfassung aller gasstromrelevanten Größen wie Druck, Temperatur und Volumen lässt sich eine maximal differenzierte Ansteuerung der Spülluftpumpe realisieren.

Es gibt auch Ausführungen, bei denen alternativ bzw. ergänzend solche Sensoren (Druck, Volumen, Temperatur) im Tank selbst, im AKF, in einer Entlüftungsleitung oder auch im Ansaugtrakt vorgesehen sind, und deren Signale für die Ansteuerung Spülluftpumpe verwendet werden.

Es gibt Ausführungen, bei denen der Spülluftstrom über ein Absperr- und/oder Regelventil in den Ansaugluftstrom eingeleitet wird, das über die Steuerung ansteuer- und/oder einstellbar ist und über das der Spülluftstrom hinsichtlich seines Drucks, seiner Masse und/oder seines Volumens einstellbar ist. Neben der Einstellung über die Spülluftpumpe lässt sich beispielsweise bei zusätzlicher Verwendung eines Absperr- und/oder Regelventils eine Regenerierung des Aktivkohlefilters auch dann realisieren, wenn die Spülluftpumpe nur passiv durchströmt werden soll (beispielsweise bei einem ausreichend hohen Druckgefälle, bei dem kein Pumpeneinsatz erforderlich ist. So ein Druckgefälle kann z.B. bei MPI (Multi Point Injection)-Motoren ohne Abgasturbolader gegeben sein). Ein zusätzliches Absperr- und/oder Regelventil kann dann sicherstellen, dass wenigstens in bestimmten Betriebszuständen der Verbrennungskraftmaschine eine Regenerierung des Aktivkohlefilters möglich ist.

Bei Ausführungen, bei denen die Spülluftpumpe in eine Diagnoseförderrichtung betreibbar ist, so dass eine Tankdichtigkeits- bzw. -leckagediagnose durchführbar ist, erweitert den Einsatzbereich des erfindungsgemäßen Tankentlüftungssystems. In einigen Regionen (zum Beispiel Nordamerika) ist eine Tankdichtigkeitsdiagnoseeinrichtung ein vorgeschriebenes Merkmal eines Tankentlüftungssystems. Ist die Spülluftpumpe in beide Richtungen betreibbar, so kann diese Tankdichtigkeitsdiagnose oder auch Leckdiagnose in das bereits vorhandene System integriert werden und muss gegebenenfalls nur steuerungstechnisch aktiviert werden.

Es gibt auch ein Verfahren zum Regenerieren eines Sorptionsspeichers, das die folgenden Schritte aufweist:
- Bereitstellen eines Tankentlüftungssystems mit wenigstens einem der oben beschriebenen Merkmale;
- Erfassen eines Betriebszustands der Verbrennungskraftmaschine;
- Ansteuern der Spülluftpumpe und Einstellen des Spülluftstroms entsprechend einem Betriebszustand der Verbrennungskraftmaschine und/oder eines Verdichters;
- Regenerieren des Kraftstoffs aus dem Sorptionsspeicher und
- Dosieren des regenerierten Kraftstoffs über den Spülluftstrom in den Ansaugluftstrom, wobei das Einstellen des Spülluftstroms und Dosieren des regenerierten Kraftstoffs unter Berücksichtigung eines der folgenden Parameter erfolgt: λ-Wert, Spülluftdruck, Spülluftvolumen, Spüllufttemperatur.

So ein Verfahren ermöglicht einerseits eine vereinfachte, verbesserte und weiter differenzierbare Spülluftsteuerung zur zuverlässigen Regenerierung eines Sorptionsspeichers und andererseits eine exakte Dosierung des regenerierten Kraftstoffstroms in die Verbrennungskraftmaschine, wie sie für moderne Ottomotoren erforderlich ist.

Optional kann zusätzlich wenigstens einer der folgenden Schritte vorgesehen sein:
- Erfassen eines Drucksignals in der Spülluftleitung,
- Erfassen eines Volumenstromsignals in der Spülluftleitung,
- Erfassen eines Temperatursignals in der Spülluftleitung
- Erfassen eines λ-Werts in einem Abgasleitungsabschnitt,
- Ansteuern eines elektrischen Antriebs der Spülluftpumpe über einen Versorgungsstrom, eine Versorgungsspannung und/oder eine Erregerfrequenz,
- Ansteuern eines Absperr-/Regelventil.

So ein um wenigstens eine dieser Maßnahmen erweitertes Verfahren erlaubt eine weiter differenzierte und damit ggf. auch weiter verbesserte Spülluftsteuerung und Dosierung des regenerierten Kraftstoffs.

Ein Kraftfahrzeug mit einem erfindungsgemäßen Tankentlüftungssystem, das dazu eingerichtet ist, das oben angegebene Verfahren auszuführen, ist hinsichtlich seiner emissionstechnischen Ausrüstung und hinsichtlich der optimalen Nutzung aller verfügbaren Kraftstoffkomponenten verbessert.

Ausführungsbeispiele der Erfindung werden nun beispielhaft und unter Bezugnahme auf die beigefügte Zeichnung beschrieben. Darin zeigt:
- Fig. 1: ein erstes Ausführungsbeispiel eines erfindungsgemäßen Tankentlüftungssystems einer Verbrennungskraftmaschine,
- Fig. 2: ein zweites Ausführungsbeispiel eines erfindungsgemäßen Tankentlüftungssystems,
- Fig. 3: ein drittes Ausführungsbeispiel eines erfindungsgemäßen Tankentlüftungssystems,
- Fig. 4: ein viertes Ausführungsbeispiel eines erfindungsgemäßen Tankentlüftungssystems, bei dem auch die Steuerung angezeigt ist, und
- Fig. 5: ein Ablaufdiagramm eines erfindungsgemäßen Verfahrens zum Regenerieren eines Sorptionsspeichers.

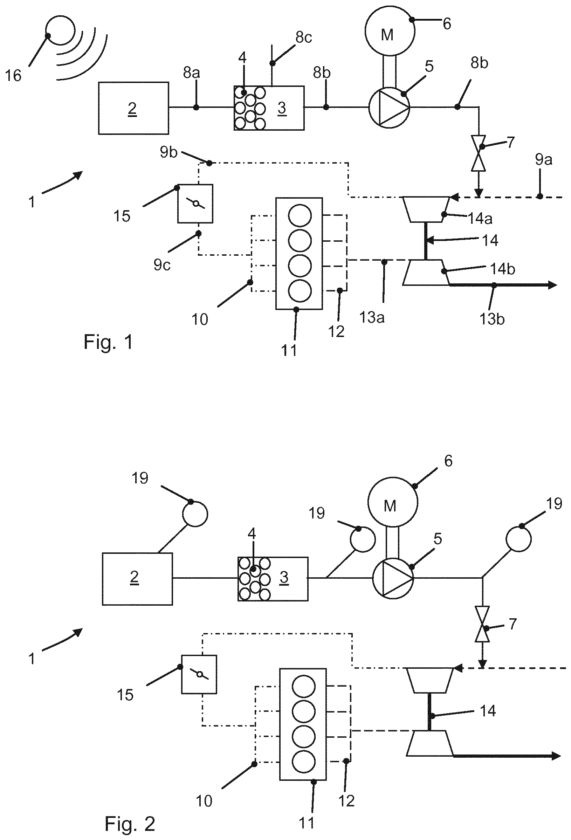

Ein erstes Ausführungsbeispiel eines erfindungsgemäßen Tankentlüftungssystems 1 ist in Fig. 1 dargestellt. Es umfasst einen Kraftstoffbehälter oder einfach Tank 2, einen Sorptionsspeicher 3, der als Aktivkohlefilter bzw. Aktivkohlefalle (auch AKF) ausgebildet ist, und eine Aktivkohlefüllung 4 umfasst. Weiter ist eine Spülluftpumpe 5 mit einem elektrischen Antrieb 6 vorgesehen sowie optional ein Absperr- und/oder Regelventil 7. Tank 2, Sorptionsspeicher 3, Spülluftpumpe 5 und gegebenenfalls Absperr-/Regelventil 7 sind über eine Tankentlüftungsleitung 8a bzw. Spülluftleitung 8b miteinander verbunden.

Die Spülluftleitung 8b mündet in einen ersten Ansaugleitungsabschnitt 9a (von einem nicht dargestellten Luftfilter kommend), der über einen zweiten Ansaugleitungsabschnitt 9b und einen dritten Ansaugleitungsabschnitt 9c über einen Verteiler 10 in eine als Ottomotor ausgebildete Verbrennungskraftmaschine (VKM) 11 mündet. Die Abgase der Verbrennungskraftmaschine 11 werden über einen Krümmer 12 in einen ersten Abgasleitungsabschnitt 13a und einen zweiten Abgasleitungsabschnitt 13b geführt.

Der Aktivkohlefilter 3 ist zwischen der Tankentlüftungsleitung 8a und der Spülluftleitung 8b angeordnet. Die Spülluftpumpe 5 ist in der Spülluftleitung 8b zwischen dem Aktivkohlefilter 3 und dem ersten Ansaugleitungsabschnitt 9a angeordnet.

Das optionale Absperr-/Regelventil 7 ist hier in der Spülluftleitung 8b zwischen der Spülluftpumpe 5 und dem ersten Ansaugleitungsabschnitt 9a dargestellt. In einer alternativen Ausführung kann dieses optionale Absperr-/Regelventil 7 auch zwischen dem Aktivkohlefilter 3 und der Spülluftpumpe 5 vorgesehen werden.

Zwischen dem ersten Ansaugleitungsabschnitt 9a und dem zweiten Ansaugleitungsabschnitt 9b (auch Druckrohr genannt) ist ein Abgasturbolader (ATL) 14 angeordnet, dessen Verdichterrad 14a zwischen dem ersten und zweiten Ansaugleitungsabschnitt 9a, 9b wirkt. Das Turbinenrad 14b des Abgasturboladers 14 wirkt zwischen dem ersten und zweiten Abgasleitungsabschnitt 13a und 13b.

Zwischen dem zweiten Ansaugleitungsabschnitt 9b und dem dritten Ansaugleitungsabschnitt 9c (auch Saugrohr genannt) wirkt die Drosselklappe 15, welche den Ansaugluftstrom zwischen dem Turbolader 14 und der Verbrennungskraftmaschine 11 reguliert.

Das Tankentlüftungssystem 1 wirkt folgendermaßen: Steigt im Kraftstoffbehälter 2 der Druck relativ zum Umgebungsdruck, wird der Überdruck über die Gasphase und die Tankentlüftungsleitung 8a durch den Sorptionsspeicher (Aktivkohlefilter) 3 über eine Abluftleitung 8c abgeführt. Das Gleiche passiert, wenn über eine Energiequelle 16 Wärme zugeführt wird (z.B. durch Sonneneinstrahlung oder bei hoher Umgebungstemperatur). Der im Tank 2 vorhandene Kraftstoff erwärmt sich und verdampft teilweise. Um eine unzulässige Druckerhöhung im Tank 2 zu verhindern, wird der verdunstete Kraftstoff durch die Tankentlüftungsleitung 8a in den Sorptionsspeicher 3 geleitet, die Kraftstoffbestandteile werden in der Aktivkohlefüllung 4 angereichert und die gereinigte Abluft wird über die Abluftleitung 8c an die Umgebung abgegeben.

Ist nun das Aufnahmevermögen des Aktivkohlefilters 3 mit Kraftstoff erschöpft, muss dieser regeneriert werden. Dies geschieht während des Betriebs der Verbrennungskraftmaschine 11. Dabei treibt der elektrische Antrieb 6 die Spülluftpumpe 5 an, die einen Frischluftstrom über die Tankentlüftungsleitung 8a (gegebenenfalls auch durch den Tank 2) bzw. über die dann als Zuluftleitung dienende Abluftleitung 8c durch die Aktivkohlefüllung 4 des Aktivkohlefilters 3 leitet. Dieser Spülluftstrom nimmt dabei den im Aktivkohlefilter 3 angelagerten Kraftstoff auf und wird über die Spülluftpumpe 4 durch die Spülluftleitung 8b in den ersten Ansaugleitungsabschnitt 9a (zwischen dem nicht dargestellten Luftfilter und dem Verdichterrad 14a) eingeleitet. Der so über den Spülluftstrom mit Kraftstoff angereicherte Ansaugluftstrom wird verdichtet und über den zweiten Ansaugleitungsabschnitt 9b (Druckrohr) 9b, die Drosselklappe 15 und den dritten Ansaugleitungsabschnitt 9c (Saugrohr) über den Verteiler 11 in die Verbrennungskraftmaschine 11 geführt, wo er dann zusammen mit dem eingespritzten Primärkraftstoff verbrannt/genutzt wird.

Der Spülluftstrom wird dabei mittels der Spülluftpumpe 5 bzw. des elektrischen Antriebs 6 hinsichtlich seines Drucks, seiner Masse und/oder seines Volumens eingestellt, und zwar hinsichtlich eines Betriebszustands der Verbrennungskraftmaschine 11. Damit kann sowohl die Spülluftmenge (der Volumenstrom) als auch der Spülluftdruck eingestellt werden. Weiter kann so auch der über die Spülluft zugeführte regenerierte Kraftstoff in gewünschter Weise eindosiert werden.

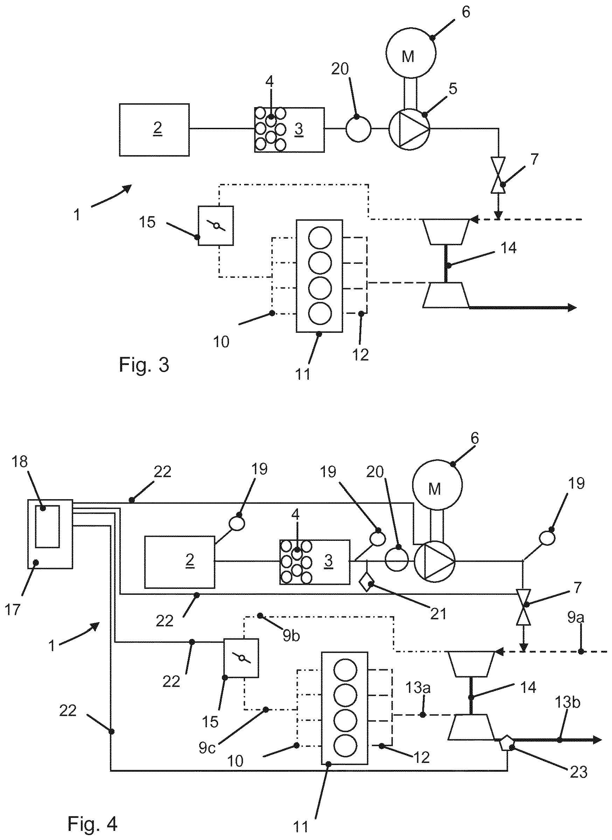

Dazu dient eine Steuerung 17 (siehe Fig. 4), die sowohl mit der Verbrennungskraftmaschine 11 als auch mit der Spülluftpumpe 5 bzw. mit dem elektrischen Antrieb 6 verbunden ist. Die Steuerung der Spülluftpumpe erfolgt beispielsweise entsprechend der Drehzahl bzw. der Last der Verbrennungskraftmaschine 11. Dazu können in der Steuerung 17 ein oder mehrere Kennfelder (z.B. mit Last-/Drehzahldaten) hinterlegt sein, die dann entsprechenden Betriebszuständen der Spülluftpumpe (Druck, Volumen) bzw. entsprechenden Ansteuerungsgrößen des elektrischen Antriebs 6 (z.B. Strom, Spannung, Erregerfrequenz) zugeordnet werden.

Ergänzend kann der Spülluftstrom auch über einen Betriebszustand des Abgasturboladers 14 gesteuert werden. Dazu ist dieser beispielsweise über einen Drehzahlsensor mit der Steuerung 17 gekoppelt, die dann unter Berücksichtigung der Drehzahl des Abgasturboladers die Spülluftpumpe 5 bzw. den elektrischen Antrieb 6 ansteuert. Auch die unterschiedlichen Betriebszustände des Abgasturboladers können in Kennfeldern in der Steuerung 17 hinterlegt sein und so als Grundlage für eine ergänzenden kennfeldgesteuerte Ansteuerung der Spülluftpumpe 5 dienen.

Dabei wird der elektrische Antrieb 6 ebenfalls hinsichtlich des auf die Spülluftpumpe 5 übertragenen Drehmoments und/oder einer gewünschten Drehzahl über einen Versorgungsstrom, eine Versorgungsspannung und/oder eine Erregerfrequenz angesteuert. Diese Größen korrelieren mit einem gewünschten Spülluftstrom, und zwar hinsichtlich seines Drucks und seines Volumens (genauer seines Volumenstroms).

Zur Ergänzung und/oder Differenzierung der Ansteuerung der Spülluftpumpe 5 kann zusätzlich das Absperr-/Regelventil 7 angesteuert werden (zum Beispiel als kontinuierlich verstellbares oder intervallweise ansteuerbares Magnetventil). Die Ansteuerung kann beispielsweise über ein pulsweitenmoduliertes Steuersignal erfolgen, welches den Öffnungsquerschnitt bzw. die Öffnungs-/Schließfrequenz festlegt.

Fig. 2 zeigt ein zweites Ausführungsbeispiel eines erfindungsgemäßen Tankentlüftungssystems, bei dem zusätzlich im Tank, in der Tankentlüftungsleitung 8a bzw. in der Spülluftleitung 8b ein (oder mehrere) Drucksensor(en) 19 angeordnet ist, der ein entsprechendes Drucksignal an die Steuerung 17 abgibt und den Spülluftstrom zusätzlich unter Berücksichtigung des aufgenommenen Drucksignals einstellt. So ein Drucksignal ist beispielsweise hilfreich, um eine kennfeldorientierte Ansteuerung des Motors 6 und damit der Spülluftpumpe 5 über ein zusätzliches Drucksignal vor und/oder hinter der Spülluftpumpe genau einzustellen bzw. einzuregeln.

Fig. 3 zeigt ein zweites Ausführungsbeispiel, bei dem zwischen dem Aktivkohlefilter 3 und der Spülluftpumpe 5 in der Spülluftleitung 8b zusätzlich ein Volumenstromzähler 20 vorgesehen ist. Auch dieser Volumenstromzähler gibt ein Volumenstromsignal an die Steuerung 17 ab, so dass diese die Spülluftpumpe 5 und damit den Spülluftstrom unter Berücksichtigung des Volumenstromsignals einstellt (steuert bzw. regelt).

Die in Fig. 2 und Fig. 3 dargestellten Ausführungsbeispiele können auch miteinander kombiniert werden, so dass sowohl Volumenstromsignale als auch Drucksignale zur Ansteuerung der Spülluftpumpe 5 und zur Einstellung des Spülluftstroms verwendet werden.

Sowohl der Volumenstromzähler 20 als auch der oder die Drucksensoren 19 können dabei um einen Temperatursensor 21 ergänzt werden, der entweder in den Drucksensor 19 bzw. den Volumenstromzähler 20 integriert ist oder als eigener Temperatursensor 21 in der Spülluftleitung 8b bzw. in der Spülluftpumpe 5 vorgesehen sein kann und entsprechende Signale an die Steuerung 17 liefert.

In Fig. 4 ist die Steuerung 17 mit einem Kennfeld 18 dargestellt, die über Signal- und Steuerleitungen 22 mit den wesentlichen Komponenten des Tankentlüftungssystems 1 und der Verbrennungskraftmaschine 11 gekoppelt ist und über diese entweder Signale empfängt bzw. Steuersignale abgibt.

Zusätzlich ist eine λ-Sonde 23 dargestellt, die im Abgasleitungsabschnitt 13b die Abgaszusammensetzung kontrolliert und so das gewünschte Ansaugluft-Kraftstoffmengenverhältnis (in der Regel λ=1) kontrolliert. Durch die Berücksichtigung der Signale der λ-Sonde 23 ist es möglich, über eine entsprechende Ansteuerung der Spülluftpumpe 5 die regenerierte Kraftstoffmenge bei der Kraftstoffeinspritzung zu berücksichtigen bzw. die Spülluftpumpe 5 so einzustellen, dass sich die regenerierte Kraftstoffmenge, die in die Ansaugluft eindosiert wird, konstant verhält, so dass z.B. die primäre Einspritzdosierung durch die eindosierte Regenerationskraftstoffmenge während des Regenerationsvorgangs unbeeinflusst bleibt bzw. bei der Einspritzsteuerung berücksichtigt wird.

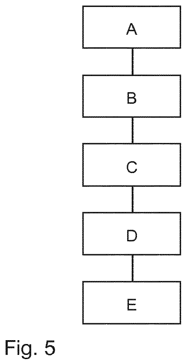

Das in Fig. 5 dargestellte Verfahren zum Regenerieren des Sorptionsspeichers weist die Schritte A) bis E) auf, nämlich:
A) Bereitstellen eines erfindungsgemäßen Tankentlüftungssystems 1, das eines oder mehrere der vorbeschriebenen Merkmale aufweist,
B) Erfassen eines Betriebszustandes der Verbrennungskraftmaschine 11,
C) Ansteuern der Spülluftpumpe 5 und Einstellen des Spülluftstromes entsprechend einem Betriebszustand der Verbrennungskraftmaschine 11 und/oder eines Verdichters (14a),
D) Regenerieren des Kraftstoffs aus dem Sorptionsspeicher 3 und
E) Dosieren des regenerierten Kraftstoffs über den Spülluftstrom in den Ansaugluftstrom, wobei das Einstellen des Spülluftstromes und Dosieren des regenerierten Kraftstoffs unter Berücksichtigung eines der folgenden Parameter erfolgt: λ-Wert, Spülluftdruck, Spülluftvolumenstrom.

Optional kann zusätzlich wenigstens einer der folgenden Schritte vorgesehen sein:
- Erfassen eines Drucksignals in der Spülluftleitung 8b,
- Erfassen eines Volumenstromsignals in der Spülluftleitung 8b,
- Erfassen eines Temperatursignals in der Spülluftleitung 8b
- Erfassen eines λ-Werts in einem Abgasleitungsabschnitt 13b,
- Ansteuern eines elektrischen Antriebs 6 der Spülluftpumpe 5 über einen Versorgungsstrom, eine Versorgungsspannung und/oder eine Erregerfrequenz,
- Ansteuern eines Absperr-/Regelventils 7.

Das System und das Verfahren ist auch für MPI-Ottomotoren geeignet. Die Einleitstelle der Spülluftleitung 8b in die Ansaugleitung 9a, 9b, 9c ist dann vor einer Drosselklappe bzw. in das Saugrohr 9c vorzusehen. Dabei ist die Spülluftpumpe 5 entsprechend robust zu gestalten, damit sie dem ggf. hohen Saugrohrunterdruck und den dadurch bedingten hohen Druckdifferenzen standhält und geeignet ist, den Spülluftstrom in gewünschter Weise einzustellen.

Weitere Ausführungen und Variationen der Erfindung ergeben sich für den Fachmann im Rahmen der Ansprüche.

### Bezugszeichenliste

- 1: Tankentlüftungssystem
- 2: Kraftstoffbehälter, Tank
- 3: Sorptionsspeicher, Aktivkohlefilter, Aktivkohlefalle, AKF
- 4: Aktivkohlefüllung
- 5: Spülluftpumpe
- 6: elektrischer Antrieb
- 7: Absperr-/Regelventil (optional)
- 8a: Tankentlüftungsleitung
- 8b: Spülluftleitung
- 8c: Abluftleitung/Zuluftleitung
- 9a: erster Ansaugleitungsabschnitt (vom Luftfilter kommend)
- 9b: zweiter Ansaugleitungsabschnitt (Druckrohr)
- 9c: dritter Ansaugleitungsabschnitt (Saugrohr)
- 10: Verteiler
- 11: Verbrennungskraftmaschine (VKM), Automotor
- 12: Krümmer
- 13a: erster Abgasleitungsabschnitt (vor der Turbine)
- 13b: zweiter Abgasleitungsabschnitt (nach der Turbine)
- 14: Abgasturbolader
- 14a: Verdichterrad
- 14b: Turbinenrad
- 15: Drosselklappe
- 16: Wärmequelle
- 17: Steuerung
- 18: Kennfeld
- 19: Drucksensor
- 20: Volumenstromzähler
- 21: Temperatursensor
- 22: Signal- und Steuerleitung
- 23: λ-Sonde

## Patentansprüche

1. Tankentlüftungssystem (1) für eine Verbrennungskraftmaschine (11) mit:
einem Tank (2), der über eine Tankentlüftung (8a) mit einem Sorptionsspeicher (3) zum Zwischenspeichern von Kraftstoff aus einem Tankentlüftungsstrom verbunden ist,
einer Spülluftpumpe (5, 6), zum Zuführen von regeneriertem Kraftstoff aus dem Sorptionsspeicher (3) über einen Spülluftstrom in einen Ansaugluftstrom zur Verbrennungskraftmaschine (11), wobei
eine Steuerung (17) vorgesehen ist, die dazu ausgebildet ist, die Spülluftpumpe (5, 6) derart anzusteuern, dass der Spülluftstrom hinsichtlich seines Drucks, seiner Masse und/oder seines Volumens einstellbar ist, so dass eine Dosierung des regenerierten Kraftstoffs über den Spülluftstrom in den Ansaugluftstrom entsprechend einem Betriebszustand der Verbrennungskraftmaschine (11) erfolgt, und
der Ansaugluftstrom der Verbrennungskraftmaschine (11) über einen Verdichter (14) zugeführt wird und die Dosierung entsprechend einem Betriebszustand des Verdichters (14) erfolgt.

2. Tankentlüftungssystem (1) nach Anspruch 1, wobei der Betriebszustand eine Drehzahl und/oder einen Lastzustand der Verbrennungskraftmaschine (11) umfasst.

3. Tankentlüftungssystem (1) nach Anspruch 1, wobei der Verdichter als Abgasturbolader (14) ausgebildet ist.

4. Tankentlüftungssystem (1) nach Anspruch 1 oder 3, wobei der Spülluftstrom bezogen auf eine Ansaugluftstromrichtung vor dem Verdichter (14) dem Ansaugluftstrom zugeführt wird.

5. Tankentlüftungssystem (1) nach einem der Ansprüche 1 bis 4, wobei die Spülluftpumpe (5) einen elektrischen Antrieb (6) umfasst, der strom- und/oder spannungsabhängig hinsichtlich Drehmoment und/oder Drehzahl über die Steuerung (17) einstellbar ist, so dass die Dosierung über die Ansteuerung des elektrischen Antriebs (6) erfolgt.

6. Tankentlüftungssystem (1) nach Anspruch 5, wobei die Ansteuerung des elektrischen Antriebs (6) über ein Kennfeld (18) erfolgt.

7. Tankentlüftungssystem (1) nach einem der Ansprüche vorhergehenden Ansprüche, wobei die Dosierung unter Berücksichtigung eines λ-Werts erfolgt, der von einer in einem Abgasstrom angeordneten λ-Sonde (23) erfasst wird.

8. Tankentlüftungssystem (1) nach einem der vorhergehenden Ansprüche, wobei im Tank (2) und/oder in einer Spülluftleitung (8b) ein Drucksensor (19) zum Erfassen eines Spülluftdrucks angeordnet ist und der Spülluftstrom unter Berücksichtigung eines Drucksignals einstellbar ist.

9. Tankentlüftungssystem (1) nach einem der vorhergehenden Ansprüche, wobei in einer Spülluftleitung (8b) ein Volumenstromsensor (20) zum Erfassen eines Spülluftvolumenstroms angeordnet ist und der Spülluftstrom unter Berücksichtigung eines Volumenstromsignals einstellbar ist.

10. Tankentlüftungssystem (1) nach einem der der vorhergehenden Ansprüche, wobei der Spülluftstrom über ein Absperr- und/oder Regelventil (7) in den Ansaugluftstrom eingeleitet wird, das über die Steuerung (17) ansteuer- und/oder einstellbar ist und über das der Spülluftstrom hinsichtlich seines Drucks, seiner Masse und/oder seines Volumens einstellbar ist.

11. Tankentlüftungssystem (1) nach einem der der vorhergehenden Ansprüche, wobei die Spülluftpumpe (5) in einer Diagnoseförderrichtung betreibbar ist, in der eine Tankdichtigkeitsdiagnose durchführbar ist.

12. Verfahren zum Regenerieren eines Sorptionsspeichers (3) mit:
- Bereitstellen eines Tankentlüftungssystems (1) nach einem der Ansprüche 1 bis 11;
- Erfassen eines Betriebszustandes der Verbrennungskraftmaschine (11);
- Ansteuern der Spülluftpumpe (5) und Einstellen des Spülluftstromes entsprechend einem Betriebszustand der Verbrennungskraftmaschine (11) und eines Verdichters (14);
- Regenerieren des Kraftstoffs aus dem Sorptionsspeicher (3);
- Dosieren des regenerierten Kraftstoffs über den Spülluftstrom in den Ansaugluftstrom,
wobei das Einstellen des Spülluftstromes und Dosieren des regenerierten Kraftstoffs unter Berücksichtigung eines der folgenden Parameter erfolgt: λ-Wert, Spülluftdruck, Spülluftvolumenstrom, Spüllufttemperatur.

13. Verfahren nach Anspruch 12 mit einem der folgenden Schritte:
- Erfassen eines Drucksignals in der Spülluftleitung (8b),
- Erfassen eines Volumenstromsignals in der Spülluftleitung (8b),
- Erfassen eines Temperatursignals in der Spülluftleitung (8b)
- Erfassen eines λ-Werts in einem Abgasleitungsabschnitt (13b),
- Ansteuern eines elektrischen Antriebs (6) der Spülluftpumpe (5) über einen Versorgungsstrom, eine Versorgungsspannung und/oder eine Erregerfrequenz,
- Ansteuern eines Absperr-/Regelventils (7).

14. Kraftfahrzeug (100) mit einem Tankentlüftungssystem (1) nach einem der Ansprüche 1 bis 11, wobei das Tankentlüftungssystem (1) dazu eingerichtet ist, ein Verfahren nach Anspruch 13 auszuführen.

## Claims

1. A tank ventilation system (1) for an internal combustion engine (11) having:
A tank (2), which is connected via a tank ventilation (8a) to a sorption reservoir (3) for temporary storage of fuel from a tank ventilation flow,
a flushing air pump (5, 6), for supplying regenerated fuel from the sorption reservoir (3) via a flushing air flow into the intake air flow to the internal combustion engine (11),
wherein
a control (17) is provided, which is designed to control the flushing air pump (5, 6) in such a manner that the flushing air flow can be adjusted with respect to its pressure,
its mass and/or its volume, so that a dosage of the regenerated fuel takes place via the flushing airflow into the intake airflow according to an operating state of the internal combustion engine (11), and
the intake airflow of the internal combustion engine (11) is supplied via a compressor (14) and the dosage takes place according to an operating state of the compressor (14).

2. The tank ventilation system (1) according to Claim 1, wherein the operating state comprises a speed and/or a load state of the internal combustion engine (11).

3. The tank ventilation system (1) according to Claim 1, wherein the compressor is designed as exhaust gas turbocharger (14).

4. The tank ventilation system (1) according to Claim 1 or 3, wherein the flushing air flow is supplied to the intake air flow based on an intake air flow direction upstream of the compressor (14).

5. The tank ventilation system (1) according to any one of Claims 1 to 4, wherein the flushing air pump (5) comprises an electrical drive (6), which can be adjusted dependent on current and/or voltage in respect to torque and/or speed via the control (17), so that the dosage takes place via the control of the electrical drive (6).

6. The tank ventilation system (1) according to Claim 5, wherein the control of the electrical drive (6) takes place via a characteristic diagram (18).

7. The tank ventilation system (1) according to any one of preceding claims, wherein the dosage takes place taking into account a λ value, which is detected by a λ probe (23) arranged in an exhaust gas flow.

8. The tank ventilation system (1) according to any one of the preceding clams, wherein in the tank (2) and/or in a flushing air line (8b) a pressure sensor (19) for detecting a flushing air pressure is arranged and the flushing air flow can be adjusted taking into account a pressure signal.

9. The tank ventilation system (1) according to any one of the preceding claims, wherein in a flushing air line (8b) a volume flow sensor (20) for detecting a flushing air volume flow is arranged and the flushing air flow can be adjusted taking into account a volume flow signal.

10. The tank ventilation system (1) according to any one of the preceding claims, wherein the flushing air flow is introduced into the intake air flow via a shut-off- and/or control valve (7), which can be controlled and/or adjusted via the control (17) and via which the flushing air flow can be adjusted with respect to its pressure, its mass and/or its volume.

11. The tank ventilation system (1) according to any one of the preceding claims, wherein the flushing air pump (5) can be operated in a diagnostic conveying direction, in which a tank tightness diagnosis can be carried out.

12. A method for regenerating a sorption reservoir (3) having:
- Provision of a tank ventilation system (1) according to any one of Claims 1 to 11;
- detection of an operating state of the internal combustion engine (11);
- control of the flushing air pump (5) and adjustment of the flushing air flow according to an operating state of the internal combustion engine (11) and of a compressor (14);
- regeneration of the fuel from the sorption reservoir (3);
- dosage of the regenerated fuel via the flushing air flow into the intake air flow,
wherein the adjustment of the flushing air flow and dosage of the regenerated fuel takes place taking into account one of the following parameters: λ value, flushing air pressure, flushing air volume flow, flushing air temperature.

13. The method according to Claim 12 having one of the following steps:
- Detection of a pressure signal in the flushing air line (8b),
- detection of a volume flow signal in the flushing air line (8b),
- detection of a temperature signal in the flushing air line (8b),
- detection of a λ value in the exhaust gas line section (13b),
- control of an electrical drive (6) of the flushing air pump (5) via a supply current, a supply voltage and/or an excitation frequency,
- control of a shut-off- /control valve (7).

14. A motor vehicle (100) with a tank ventilation system (1) according to any one of Claims 1 to 11, wherein the tank ventilation system (1) is configured to carry out a method according to Claim 13.

## Revendications

1. Système de dégazage de réservoir (1) pour un moteur à combustion interne (11), avec :
un réservoir (2) qui est, par le biais d'un dégazage de réservoir (8a), raccordé à un accumulateur à sorption (3) pour le stockage intermédiaire de carburant en provenance d'un flux de dégazage de réservoir,
une pompe d'air de balayage (5, 6) pour l'acheminement de carburant régénéré en provenance de l'accumulateur à sorption (3), par le biais d'un flux d'air de balayage, dans un flux d'air d'aspiration vers le moteur à combustion interne (11),
une commande (17) étant prévue, qui est constituée pour piloter la pompe d'air de balayage (5, 6) de telle sorte que le flux d'air de balayage peut être réglé en ce qui concerne sa pression, sa masse et/ou son volume de sorte qu'un dosage du carburant régénéré s'effectue par le biais du flux d'air de balayage dans le flux d'air d'aspiration en fonction d'un état de fonctionnement du moteur à combustion interne (11), et
le flux d'air d'aspiration étant acheminé au moteur à combustion interne (11) par le biais d'un compresseur (14), et le dosage s'effectuant en fonction d'un état de fonctionnement du compresseur (14).

2. Système de dégazage de réservoir (1) selon la revendication 1, l'état de fonctionnement comprenant un régime et/ou un état de charge du moteur à combustion interne (11).

3. Système de dégazage de réservoir (1) selon la revendication 1, le compresseur étant constitué en tant que turbocompresseur à gaz d'échappement (14).

4. Système de dégazage de réservoir (1) selon la revendication 1 ou 3, le flux d'air de balayage étant acheminé au flux d'air d'aspiration en amont du compresseur (14) par rapport à une direction du flux d'air d'aspiration.

5. Système de dégazage de réservoir (1) selon l'une des revendications 1 à 4, la pompe d'air de balayage (5) comprenant un entraînement (6) électrique qui peut, en fonction de l'intensité et/ou de la tension, être réglé par le biais de la commande (17) en ce qui concerne le couple et/ou le régime de sorte que le dosage s'effectue par le biais du pilotage de l'entraînement (6) électrique.

6. Système de dégazage de réservoir (1) selon la revendication 5, le pilotage de l'entraînement (6) électrique s'effectuant par le biais d'un diagramme caractéristique (18).

7. Système de dégazage de réservoir (1) selon l'une des revendications précédentes, le dosage s'effectuant en tenant compte d'une valeur À qui est détectée par une sonde À (23) disposée dans un flux de gaz d'échappement.

8. Système de dégazage de réservoir (1) selon l'une des revendications précédentes, un capteur de pression (19) étant disposé dans le réservoir (2) et/ou dans une conduite d'air de balayage (8b) pour la détection d'une pression d'air de balayage, et le flux d'air de balayage pouvant être réglé en prenant en compte un signal de pression.

9. Système de dégazage de réservoir (1) selon l'une des revendications précédentes, un capteur de flux volumique (20) étant disposé dans une conduite d'air de balayage (8b) pour la détection d'un flux volumique d'air balayage, et le flux d'air de balayage pouvant être réglé en prenant en compte un signal de flux volumique.

10. Système de dégazage de réservoir (1) selon l'une des revendications précédentes, le flux d'air de balayage étant introduit dans le flux d'air d'aspiration par le biais d'une vanne d'arrêt et/ou de régulation (7) qui peut être pilotée et/ou réglée par le biais de la commande (17), et par le biais de laquelle le flux d'air de balayage peut être réglé en ce qui concerne sa pression, sa masse et/ou son volume.

11. Système de dégazage de réservoir (1) selon l'une des revendications précédentes, la pompe d'air de balayage (5) pouvant être utilisée dans une direction de transport de diagnostic dans laquelle un diagnostic de l'étanchéité du réservoir peut être effectué.

12. Procédé de régénération d'un accumulateur à sorption (3) avec :
- fourniture d'un système de dégazage de réservoir (1) selon l'une des revendications 1 à 11 ;
- détection d'un état de fonctionnement du moteur à combustion interne (11) ;
- pilotage de la pompe d'air de balayage (5) et réglage du flux d'air de balayage en fonction d'un état de fonctionnement du moteur à combustion interne (11) et d'un compresseur (14) ;
- régénération du carburant à partir de l'accumulateur à sorption (3) ;
- dosage du carburant régénéré par le biais du flux d'air de balayage dans le flux d'air d'aspiration, le réglage du flux d'air de balayage et le dosage du carburant régénéré s'effectuant en prenant en compte un des paramètres suivants : valeur À, pression de l'air de balayage, flux volumique de l'air de balayage, température de l'air de balayage.

13. Procédé selon la revendication 12, avec l'une des étapes suivantes :
- détection d'un signal de pression dans la conduite d'air de balayage (8b),
- détection d'un signal de flux volumique dans la conduite d'air de balayage (8b),
- détection d'un signal de température dans la conduite d'air de balayage (8b),
- détection d'une valeur À dans un tronçon de conduite de gaz d'échappement (13b),
- pilotage d'un entraînement (6) électrique de la pompe d'air de balayage (5) par le biais d'un courant d'alimentation, d'une tension d'alimentation et/ou d'une fréquence d'excitation,
- pilotage d'une vanne d'arrêt / de régulation (7).

14. Véhicule automobile (100) avec un système de dégazage de réservoir (1) selon l'une des revendications 1 à 11, le système de dégazage de réservoir (1) étant agencé pour réaliser un procédé selon la revendication 13.
